Europäisches Patentamt

European Patent Office

Office européen des brevets

(19)

(11) Veröffentlichungsnummer: **0 007 999**
**B1**

(12) **EUROPÄISCHE PATENTSCHRIFT**

(45) Veröffentlichungstag der Patentschrift:
04.11.81

(51) Int. Cl.³: **F 16 M 11/20**

(21) Anmeldenummer: **79102243.7**

(22) Anmeldetag: **03.07.79**

(54) **Geländeanpassungsfähige Standkonstruktion.**

(30) Priorität: **04.08.78 DE 2834301**
**30.11.78 DE 2851859**

(43) Veröffentlichungstag der Anmeldung:
**20.02.80 Patentblatt 80/4**

(45) Bekanntmachung des Hinweises auf die Patenterteilung:
**04.11.81 Patentblatt 81/44**

(84) Benannte Vertragsstaaten:
**BE DE FR GB IT NL**

(56) Entgegenhaltungen:
**DE-A-2 252 017**
**DE-B-1 034 041**
**DE-B-1 272 147**
**DE-B-1 284 312**
**DE-C-730 827**
**DE-C-964 747**
**FR-A-1 152 039**
**FR-A-1 273 466**
**FR-A-2 034 087**
**GB-A-529 739**
**US-A-3 917 306**

(73) Patentinhaber: **Tax, Hans, Potsdamer Strasse 3,**
**D-8000 München 40 (DE)**

(72) Erfinder: **Tax, Hans, Potsdamer Strasse 3,**
**D-8000 München (DE)**
Erfinder: **Hösler, Klaus, Dr., Emmeringer Strasse 15,**
**D-8031 Eichenau (DE)**
Erfinder: **Bauer, Dieter, Keplerstrasse 2,**
**D-8000 München 80 (DE)**

(74) Vertreter: **Weickmann, Heinrich, Dipl.-Ing Patentanwälte**
**Dipl.Ing.H.Weickmann et al, Dipl.Phys.Dr.K.Fincke**
**Dipl.Ing.F.A.Weickmann Dipl.Chem.B.Huber,**
**Dr.-Ing.H.Liska Möhlstrasse 22, D-8000 München 86 (DE)**

EP 0 007 999 B1

## Geländeanpassungsfähige Standkonstruktion

Die Erfindung betrifft eine geländeanpassungsfähige, insbesondere fahrbare Standkonstruktion für einen Aufbau, mit vier wenigstens annähernd in den Ecken eines Rechtecks vorzugsweise eines Quadrats, angeordneten Geländeauflagern, welche — im Falle ebenen Geländes — in einer gemeinsamen in bezug auf den Aufbau festen Nullebene liegen, wobei zwei einander diagonal gegenüberliegende Auflager gegenüber dem Aufbau in im wesentlichen vertikaler Richtung zur Nullebene beweglich und derart miteinander gekoppelt sind, daß bei Auslenkung eines ersten Auflagers gegenüber der Nullebene das zweite dem ersten diagonal gegenüberliegende Auflager gegenüber der Nullebene in gleicher Richtung und annähernd um die gleiche Strecke ausgelenkt wird und wobei das dritte und das vierte Auflager mit dem ersten und dem zweiten Auflager derart gekoppelt sind, daß sie bei diesen Auslenkungen des ersten und des zweiten Auflagers gegenüber der Nullebene in entgegengesetzter Richtung um gleiche Strecken ausgelenkt werden, wie das erste und das zweite Auflager.

Eine solche Standkonstruktion ist bekannt aus der französischen Patentschrift FR-A-2 034 087.

Bei dieser bekannten Konstruktion sind an einem Fahrgestell eine Vorderachse und eine Hinterachse um eine gemeinsame horizontale Längsmittellinie des Fahrgestells schwenkbar gelagert. Ferner ist um eine horizontale Quermittellinie ein Kopplungslenker schwenkbar gelagert, welcher an seinen beiden Enden mit den beiden Achsen universalgelenkig verbunden ist.

Bei dieser bekannten Lösung treten schwer beherrschbare Biegemomente in den Achsen auf.

Weiterhin ist aus der französischen Patentschrift 1 273 466 eine Standkonstruktion der eingangs bezeichneten Art bekannt, bei der jedes Auflager am Aufbau durch jeweils zwei bewegungsmäßig gekoppelte Zylinderkolbenaggregate in vertikaler Richtung verstellbar ist, wobei jeweils ein Kolbenzylinderaggregat zweier benachbarter Auflager über eine hydraulische Ausgleichsleitung im Sinne einer gegenläufigen Verstellbewegung miteinander verbunden sind.

Der vorliegenden Erfindung liegt die Aufgabe zugrunde, eine Standkonstruktion der eingangs bezeichneten Art auszubilden, in welcher schwer beherrschbare Biegemomente vermieden werden, ohne daß auf Zylinderkolbenaggregate entsprechend der französischen Patentschrift 1 273 466 zurückgegriffen werden muß.

Eine erste Lösungsvariante zur Lösung dieser Aufgabe sieht vor, daß der Aufbau mit einer im wesentlichen horizontalen Plattform verbunden ist, welche aus vier in vertikalen Kanten jeweils paarweise miteinander verbundenen, im wesentlichen rechteckigen verwindungsweichen Plattformwänden besteht, wobei diese Plattform im Bereich der vertikalen Kanten eine Biegesteifigkeit um die durch die vertikalen Kanten definierten Achsen haben, die kleiner ist als die Biegesteifigkeit der Plattformwände um kantenparallele Achsen im Bereich außerhalb der vertikalen Kanten und wobei durch eine Aussteifung in einem mittleren Höhenbereich der Plattform und/oder durch die Reststeifigkeit im Bereich der Kanten ein Zusammenklappen des horizontalen Plattformquerschnitts auf mittlerer Höhe der Plattformwände unter den im Betrieb zu erwartenden Horizontalkräften verhindert wird, eine Neigung einander diametral gegenüberliegender Kanten gegeneinander aber möglich ist und daß mit der Plattform nahe den Kanten horizontal nach außerhalb der Plattform ausladende Stützarme um horizontale Querachsen biegefest verbunden sind, welche in horizontalem Abstand von der jeweiligen Kante ein Auflager tragen. Dabei kann die Biegesteifigkeit der Plattformwände im Bereich der vertikalen Kanten höchstens 50%, vorzugsweise höchstens 10% der Biegesteifigkeit im Bereich außerhalb der Kanten betragen. Besonders leicht beherrschbare statische Verhältnisse erzielt man, wenn die Plattformwände in den vertikalen Kanten gelenkig miteinander verbunden sind.

Die Aussteifung kann bei der ersten Lösungsvariante in den Diagonalen-Schnittpunkten der Plattformwände angreifen, etwa in der Weise, daß die Aussteifung in den Diagonalen-Schnittpunkten der Plattformwände mit diesen um zu der jeweiligen Wandebene im wesentlichen senkrechte Achsen gelenkig oder drehweich verbunden ist.

Nach einer bevorzugten Ausführungsform der ersten Lösungsvariante ist die Aussteifung von einem Teil des Aufbaus gebildet, welcher die Verbindung des Aufbaus mit der Plattform herstellt.

Die Wände der Plattform können bei der ersten Lösungsvariante jeweils von einem Profilträger gebildet sein, etwa einem U-Profilträger, dessen Außenschenkel im wesentlichen horizontal angeordnet sind und einem Doppel-T-Profilträger, dessen Querschenkel im wesentlichen horizontal angeordnet sind.

Im Hinblick auf eine Spurveränderung der Standkonstruktion kann es erwünscht sein, daß die Stützarme jeweils nahe den vertikalen Kanten um eine im wesentlichen vertikale Schwenkachse schwenkbar an der Plattform angelenkt sind. Dabei können zur Vermeidung vermeidbarer Momente und daraus resultierender Spannungen die Schwenkachsen der die Stützarme mit der Plattform verbindenden Gelenke mit den Achsen der die Wände miteinander verbindenden Gelenke zusammenfallen.

Nach einer zweiten Lösungsvariante wird ausgegangen von der Konstruktion nach der französischen Patentschrift FR-A-2 034 087, d. h. von einer geländeanpassungsfähigen Standkonstruktion für einen Aufbau, mit vier wenigstens annähernd in den Ecken eines Rechtecks vorzugsweise eines Quadrats, angeordneten Geländeauflagern, welche — im Falle ebenen Geländes — in einer gemeinsamen in bezug auf den Aufbau festen Nullebene liegen, wobei zwei einander diagonal gegenüberliegende Auflager gegenüber dem Aufbau in im wesentlichen vertikaler Richtung zur Nullebene beweglich und derart miteinander gekoppelt sind, daß bei Auslenkung eines ersten Auflagers gegenüber der Nullebene das zweite dem ersten diagonal gegenüberliegende Auflager gegenüber der Nullebene in gleicher Richtung und annähernd um die gleiche Strecke ausgelenkt wird und wobei das dritte und das vierte Auflager mit dem ersten und dem zweiten Auflager derart gekoppelt sind, daß sie bei diesen Auslenkungen des ersten und des zweiten Auflagers gegenüber der Nullebene in entgegengesetzter Richtung um gleiche Strecken ausgelenkt werden, wie das erste und das zweite Auflager, unter Kopplung der vier Auflager durch ein am Aufbau angeordnetes Mehrlenkerkopplungssystem, dessen Kopplungslenker im wesentlichen parallel zu den Verbindungslinien jeweils zweier aufeinanderfolgender Auflager angeordnet, an ihren Enden universalgelenkig miteinander verbunden und an mittlerer Stelle ihrer Länge am Aufbau um Kopplungslenkerschwenkachsen gelenkig gelagert sind, welche senkrecht zur Längserstreckung des jeweiligen Kopplungslenkers und im wesentlichen parallel zur Nullebene sind, wobei die die Universalgelenke enthaltenden Ende des Mehrlenkerkopplungssystems mit den Auflagern verbunden sind.

Bei dieser Lösungsvariante wird vorgeschlagen, daß die Auflager in den Scheiteln je eines Zweilenkerführungssystems angeordnet sind, wobei die Zweilenkerführungssysteme diagonal einander gegenüberliegender Auflager jeweils in einer diesen Auflagern zugeordneten vertikalen Diagonalebene liegen und von annähernd im Scheitel gelenkig durch ein Scheitelgelenk mit zur jeweiligen Diagonalebene senkrechter Achse gelenkig miteinander verbundenen Führungslenkern gebildet sind und von den Führungslenkern jedes Zweilenkerführungssystems jeweils einer an seinem scheitelfernen Ende mit der zugehörigen Ecke des Mehrlenkerkopplungssystems verbunden ist und der andere mit seinem scheitelfernen Ende um ein am Aufbau angeordnetes Führungslenkergelenk mit zu der zugehörigen Diagonalebene senkrechter Achse schwenkbar gelagert ist.

Dabei kann das Führungslenkergelenk in annähernd vertikaler Flucht mit der zugehörigen Ecke des Mehrlenkerkopplungssystems liegen.

Weiter können aufeinanderfolgende Zweilenkerführungssysteme wenigstens annähernd in den Scheiteln durch Stützlenker miteinander verbunden sein, welche an den Zweilenkerführungssystemen durch Stützgelenke mit zur vertikalen Verbindungsebene der jeweiligen Auflager im wesentlichen senkrechter Gelenkachse verbunden sind.

Die beiliegenden Figuren erläutern die Erfindung anhand von Ausführungsbeispielen. Es stellen dar:

Fig. 1 das Funktionsschema einer ersten Lösungsvariante der Erfindung in einer ersten Seitenansicht in Richtung des Pfeiles I der Fig. 2,

Fig. 2 eine Seitenansicht zu Fig. 1 in Richtung des Pfeiles II der Fig. 1,

Fig. 3 eine Draufsicht zu Fig. 1 und 2 in Richtung des Pfeiles III der Fig. 1,

Fig. 4 einen Vertikalschnitt durch eine Plattformhälfte im Bereich einer Ankopplungsstelle zwischen dem Aufbau und einer Plattformwand bei der ersten Lösungsvariante,

Fig. 5 einen Teilschnitt längs Linie V-V in Fig. 4,

Fig. 6 einen der Fig. 4 entsprechenden Schnitt durch eine Plattform gemäß einer Abwandlung der ersten Lösungsvariante,

Fig. 7 einen vertikalen, parallel zu einer Plattformdiagonalen verlaufenden Schnitt im Bereich einer Plattformecke, welcher die Verbindung zweier Plattformwände untereinander sowie mit einer Stütze bei der ersten Lösungsvariante der Erfindung zeigt,

Fig. 8 eine Draufsicht auf eine Plattformecke, welche die Verbindung zweier Plattformwände untereinander nach einer weiteren Abwandlung der ersten Lösungsvariante der Erfindung zeigt und

Fig. 9 eine zweite Lösungsvariante der Erfindung.

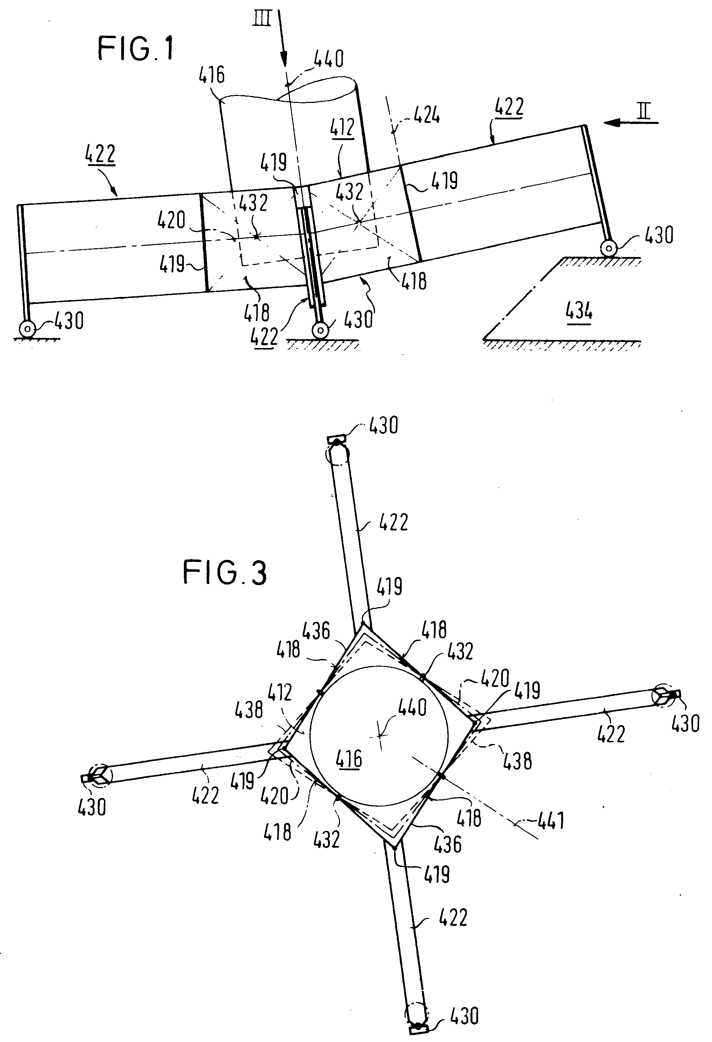

In der ersten Lösungsalternative gemäß Fig. 1, 2, 3, 4 und 5 ist der Aufbau von einer runden Säule, beispielsweise dem Unterteil einer Kransäule 416, gebildet. Dieser Aufbau ist in noch zu beschreibender Weise mit einer Plattform 412 verbunden. Die Plattform 412 besteht aus vier Plattformwänden 418, die biegefest, aber um ihre in der Wandebene horizontal verlaufende Längsmittellinie 420 verwindungsweich ausgebildet sind. Die im wesentlichen rechteckigen Plattformwände 418 sind an ihren vertikalen Kanten 419 derart biegeweich miteinander verbunden, daß sie zumindest in gewissen Grenzen im Sinne einer Vergrößerung oder Verkleinerung des zwischen je zwei Plattformwänden 418 eingeschlossenen Winkels gegeneinander bewegbar sind. Bei der Plattform 412 handelt es sich also nicht um ein starres Gebilde, das man sich unter dem Begriff »Rahmen« üblicherweise vorstellt. In den Plattformkanten 419 ist die Plattform 412 jeweils mit einem Stützarm 422 um eine im wesentlichen vertikale, mit der jeweiligen Plattformkante 419 zusammenfallende Schwenkachse gelenkig verbunden, der an seinem plattformrahmenfernen Ende auf einem Auflager 430 in Form eines Fahrwerks ruht. Selbstverständlich könnten die Stützarme 422 auch starr mit der Plattform 412 in den Kanten 419 verbunden sein. Die Lenkung der schwenkbar angeordneten Stützarme 422 kann auf irgendeine bekannte Weise erfolgen und ist nicht Gegenstand der Anmeldung.

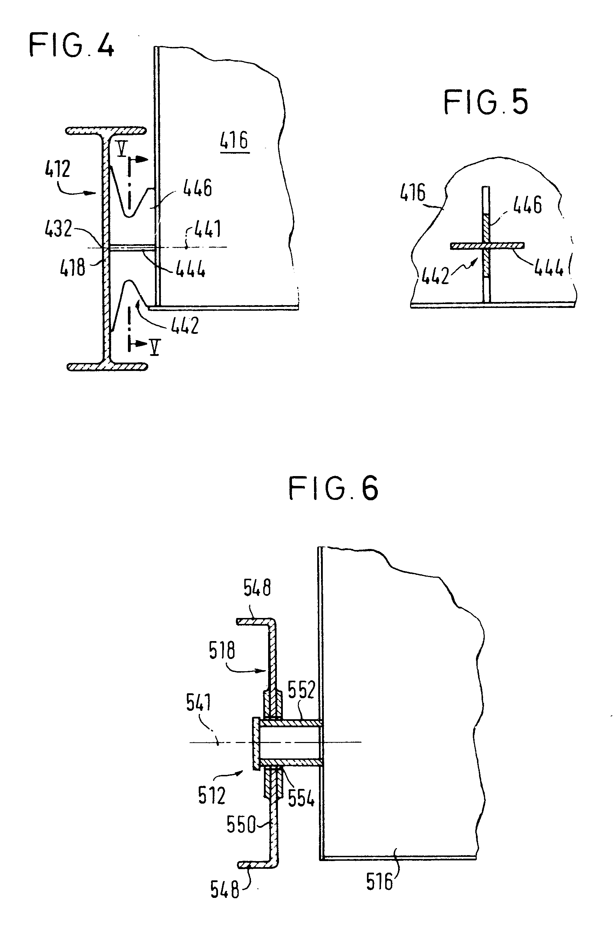

Der Aufbau 416 ist durch Gelenke 432 mit den Plattformwänden 418 gelenkig verbunden, wie dies anhand der Fig. 4 und 5 noch näher erläutert werden wird. Es ist zunächst nur so viel festzustellen, daß die Gelenkachsen der jeweiligen Gelenke 432 im wesentlichen senkrecht zur jeweiligen Plattformwand 418 durch deren Diagonalschnittpunkt verläuft, wie in Fig. 1 angedeutet.

In Fig. 1 blickt man in Richtung einer Plattformdiagonalen. Mit dem in Fig. 1 rechten Stützarm 422 steht die Plattform 412 auf einer Bodenerhebung 434. Wäre die Plattform 412 völlig starr ausgebildet, so würde einer der in Fig. 1 parallel zur Blickrichtung ausgerichteten Stützarme 422 mit seinem Fahrwerk 430 in der Luft hängen. Damit würden die restlichen Stützarme wesentlich stärker belastet als bei ebener Standfläche und die Standsicherheit der Plattform, insbesondere wenn diese als Untergestell für einen Kran dient, erheblich beeinträchtigt.

Dank der erfindungsgemäßen Ausbildung der Plattform 412 wird diese jedoch so verformt, daß alle vier Stützarme 422 mit ihren Auflagern 430 Bodenberührung behalten. Die Verteilung der Bodendrücke unter den Auflagern 430 bleibt hierbei nahezu unabhängig von der Größe der Bodenunebenheit 434. Die Art der Verformung soll nun insbesondere anhand der Fig. 3 näher erläutert werden.

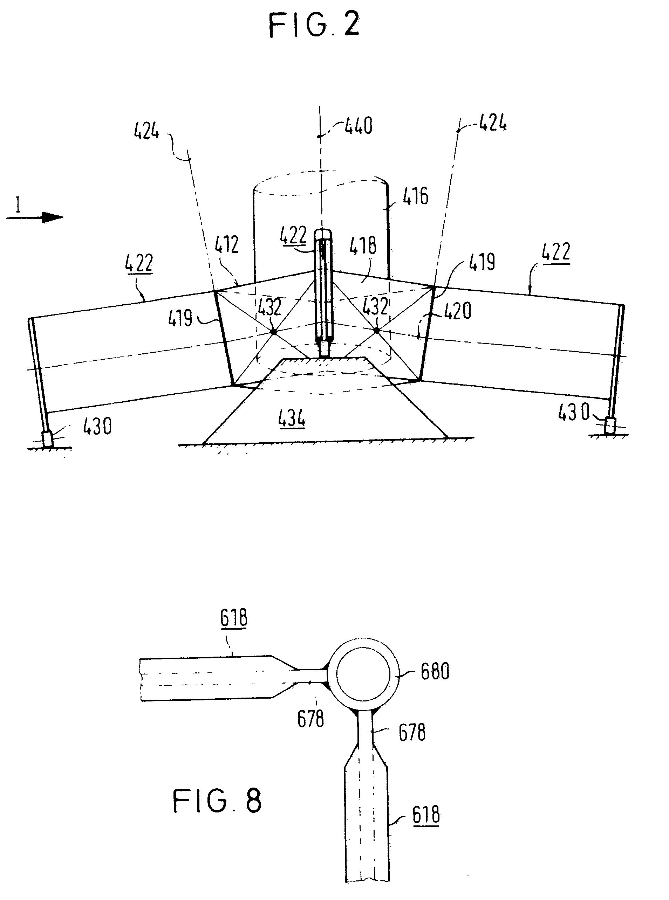

In Fig. 3 sind die oberen Ränder der Plattformwände 418 durch ausgezogene Linien 436 wiedergegeben. Die gestrichelten Linien 438 stellen die unteren Ränder der Plattformwände 418 dar und die strichpunktierten Linien entsprechen den Längsmittellinien 420 der Plattformwände 418. Wie man aus Fig. 1 erkennt, wird durch das Anheben des rechten Stützarms 422 die Achse 424 der Kante 419 so geneigt, daß sie nach oben hin mit der Achse 440 des Aufbaus 416 konvergiert. Das bedeutet, daß das aus den oberen Rändern 436 im unverformten Zustand der Plattform 412 gebildete Quadrat zu einer Raute verformt wird, deren kürzere Diagonale in den Fig. 1 und 3 in Richtung des linken und des rechten Stützarms 422 verläuft. Gleichzeitig wird das von den unteren Rändern 438 im unverformten Zustand der Plattform 412 gebildete Quadrat ebenfalls zu einer Raute verformt, deren kürzere Diagonale aber in Richtung der oberen und der unteren Stützarme 422 in Fig. 3 verläuft. Das bedeutet, daß die Achsen 424 an der oberen und der unteren Rahmenecke — in Fig. 3 betrachtet — mit der Zylinderachse 440 des Aufbaus 416 nach oben hin divergieren, wie in Fig. 2 dargestellt, und somit die an diesen Rahmenecken ansetzenden Stützarme 422 mit ihren der Plattform 412 fernen Enden nach unten gedrückt werden. Diese beiden Stützarme 422 führen also eine zu der Bewegung der auf der Bodenerhebung 434 stehenden Stützarme 422 gegenläufige Bewegung gegenüber einer Nullebene der Standkonstruktion aus, die parallel zu einer durch die Gelenke 432 definierten Ebene ist und bei ebener Fahrfläche mit dieser ebenen Fahrfläche zusammenfällt.

Wie man aus Fig. 3 erkennt, bleibt bei der Verformung der Plattform 412, die einer Verwindung der einzelnen Plattformwände 418 um ihre jeweilige Längsmittellinie 420 entspricht, der jeweilige Abstand der Plattformwand 418 von dem Aufbau 416 längs der Längsmittellinie 420 im wesentlichen konstant. Das heißt, daß längs dieser durch die Längsmittellinie 420 gegebenen Höhenlinie eine Verbindung zwischen dem Aufbau 416 und den Plattformwänden 418 erfolgen kann, ohne daß bei der Verformung der Plattform 412 wesentliche radiale Druck- oder Zugkräfte auf den Aufbau 416 ausgeübt werden. Eine vollkommen zwangskräftefreie Lagerung des Aufbaus 416 an der Plattform 412 ergibt sich dadurch, daß die Lagerstellen 432 nicht nur auf der jeweiligen Längsmittellinie 420, sondern auch im Diagonalen-Schnittpunkt der Plattformwände 418 mit einer im wesentlichen senkrecht zur Plattformwand 418 verlaufenden Gelenkachse 441 liegen. In diesem Diagonalen-Schnittpunkt bleibt die jeweiligen Plattformwand 418 bei einer Verformung der Plattform 412 in Achsrichtung des Aufbaus 416 im wesentlichen unbeweglich, da sie in diesem Punkt nur eine Drehung um die durch diesen Punkt verlaufende Gelenkachse 441 vollführt. Somit ist der Aufbau 416 bei der in den Fig. 1 bis 3 dargestellten Ausführungsform völlig zwangskräftefrei an der Plattform 412 gelagert. Trägt der Aufbau 416 beispielsweise einen Kugeldrehkranz, auf dem der Oberteil eines Krans gelagert ist, so wird dieser bei einer Verformung der Plattform 412 in keiner Weise irgendwelchen Zwangskräften ausgesetzt.

Außerdem ist die Plattform gegenüber Belastungen, die von dem Oberbau 416 auf die Plattform 412 her wirken, nicht verformbar, so daß die Standfestigkeit und Belastbarkeit der Plattform, wie bei herkömmlichen Plattformen lediglich durch die Schwerpunktlage der aus Plattform und Oberbau bestehenden Gesamtkonstruktion gegeben ist. Die Verformung der Plattform 412 wurde anhand eines Beispiels beschrieben, bei dem ein Stützarm 422 über eine Bodenerhebung fährt. Wenn der Stützarm 422 statt dessen durch eine Senke fährt, finden analoge Verformungen statt.

Anhand der Fig. 4 bis 6 soll nun die Ankopplung des Aufbaus 416 an die Plattform 412 näher erläutert werden. In Fig. 4 erkennt man in einem durch die Achse 440 des Aufbaus 416 und eine Lagerstelle 432 verlaufenden Schnitt eine in Form eines Doppel-T-Trägers ausgebildete Plattformwand 418. Ein derartiger Träger ist zwar biegesteif, setzt einer Verwindung jedoch einen wesentlich geringeren Widerstand entgegen. Die Verbindung zwischen dem Aufbau 416 und der Plattformwand 418 erfolgt über ein Verbindungselement 442, das aus zwei kreuzförmig miteinander verbundenen Flachprofilen 444, 446 besteht (siehe Fig. 5). Das Verbindungselement 442 ist sowohl mit dem Aufbau 416 als auch mit der jeweiligen Plattformwand 418 fest verbunden, beispielsweise verschweißt. Das Verbindungselement 442 ist gegenüber horizontal und vertikal zwischen der Plattformwand 418 und dem Aufbau 416 wirkenden Kräften steif, so daß die Plattform 412 durch das untere Ende des Aufbaus 416 und die Verbindungselemente 442 ausgesteift ist. Dagegen läßt es eine Drehung der Plattformwand 418 relativ zum Aufbau 416 um eine senkrecht zur Plattformwand 418 durch den Kreuzungsmittelpunkt der Flachprofile 444 und 446 verlaufende Achse 441 in dem für die Verformung der Plattform 412 notwendigen Umfang zu.

Eine Abwandlung zu Fig. 4 und 5 ist in Fig. 6 dargestellt. Bei dieser Ausführungsform ist die Plattformwand 518 von einem U-Profil mit horizontal verlaufenden Außenschenkeln 548 gebildet, wobei der die vertikale Plattformwand 518 bildende Steg 550 relativ hoch im Verhältnis zur Breite der Außenschenkel 548 ist. Die Lagerung des Aufbaus 516 erfolgt mit Hilfe eines rohrförmigen oder massiven Drehzapfens 552, der fest mit dem Aufbau 516 verbunden ist und in einer Lageröffnung 554 in dem Steg 550 der Plattformwand 518 um eine senkrecht zu dieser durch den Diagonalen-Schnittpunkt der Plattformwand 518 verlaufende Gelenkachse 541 drehbar ist. Selbstverständlich könnte der Drehzapfen 552 auch fest mit der Plattformwand 518 verbunden und drehbar in dem Aufbau 516 gelagert sein. Eine Aussteifung der Plattform 512 durch den Aufbau 516 kann beispielsweise dadurch bewerkstelligt werden, daß der Drehzapfen 552 durch eine Distanzbegrenzungshülse zwischen dem Steg 550 und dem Aufbau 516 umgeben wird.

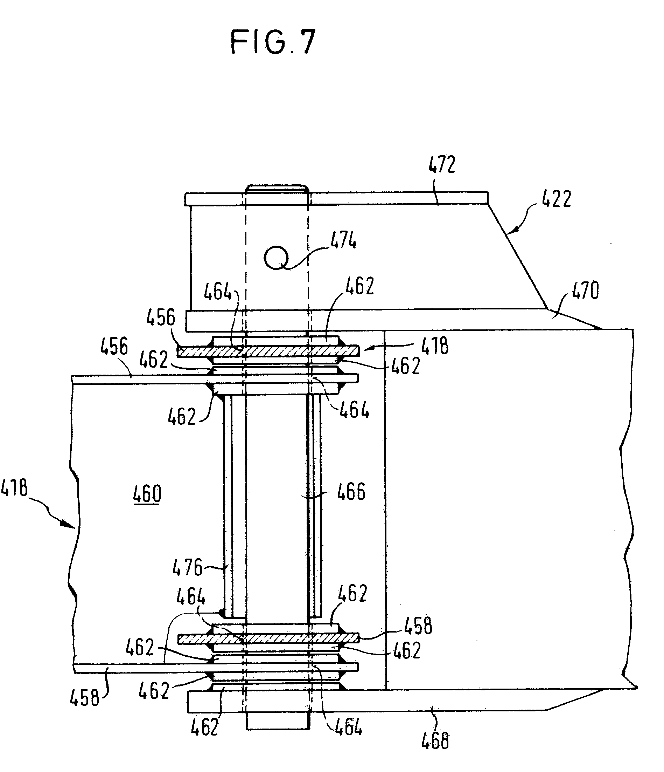

Fig. 7 zeigt die Verbindung zweier Plattformwände 418 untereinander sowie mit einem Stützarm. Man erkennt in der Figur eine Plattformwand 418, die als Doppel-T-Träger mit einem Obergurt 456 und einem Untergurt 458 ausgebildet ist. Obergurt 456 und Untergurt 458 sind über den Steg 460 hinaus verlängert und tragen jeweils Lagerringe 462, die konzentrisch zu miteinander fluchtenden Lagerbohrungen 464 in den Enden des Obergurtes 456 und des Untergurts 458 angeordnet sind. Die Lagerringe 462 sind beispielsweise mit dem Obergurt 456 und dem Untergurt 458 verschweißt. Die zweite Plattformwand 418 ist identisch ausgebildet. Von ihr erkennt man in der Zeichnung jedoch lediglich die Enden der beiden Gurte 456 und 458 sowie die Lagerringe 462. Beide Plattformwände werden durch einen Schwenkzapfen 466 miteinander verbunden, der sich durch die Bohrungen der Lagerringe 462 und die Bohrungen 464 in den Enden der Ober- und Untergurte erstreckt. An dem Schwenkzapfen 466 ist ferner ein Stützarm 422 angelenkt, wobei der Stützarm 422 die Ecke der Plattform zwischen Schenkeln 468 und 470 seines gabelförmig ausgebildeten plattformnahen Endes einschließt. Auf dem oberen Schenkel 470 des Stützarms 422 ist eine Halterung 472 angeordnet, in welcher der Schwenkzapfen 466 mit Hilfe eines senkrecht zu seiner Achse verlaufenden Bolzens 474 verankert ist.

In dem in der Fig. 7 dargestellten Zustand ist der Schwenkzapfen 466 zwischen den Lagerringen 462 von einer in zwei Halbschalen 476 unterteilten Hülse umgeben. Dabei ist jeweils eine Halbschale 476 an dem Steg 460 einer Plattformwand 418 sowie an einem Lagerring 462 befestigt. In Fig. 7 ist die Halbschale 476 an dem oberen Lagerring 462 befestigt, während sie von dem unteren Lagerring 462 einen Abstand aufweist, der das Einschieben des Untergurtes 458 der anderen Plattformwand 418 ermöglicht. An diesem Untergurt 458 oder besser gesagt an dem oberen Lagerring 462 ist die nicht dargestellte zweite Lagerschale 476 befestigt, die dann mit der dargestellten Lagerschale zusammen eine vollständige Hülse bildet.

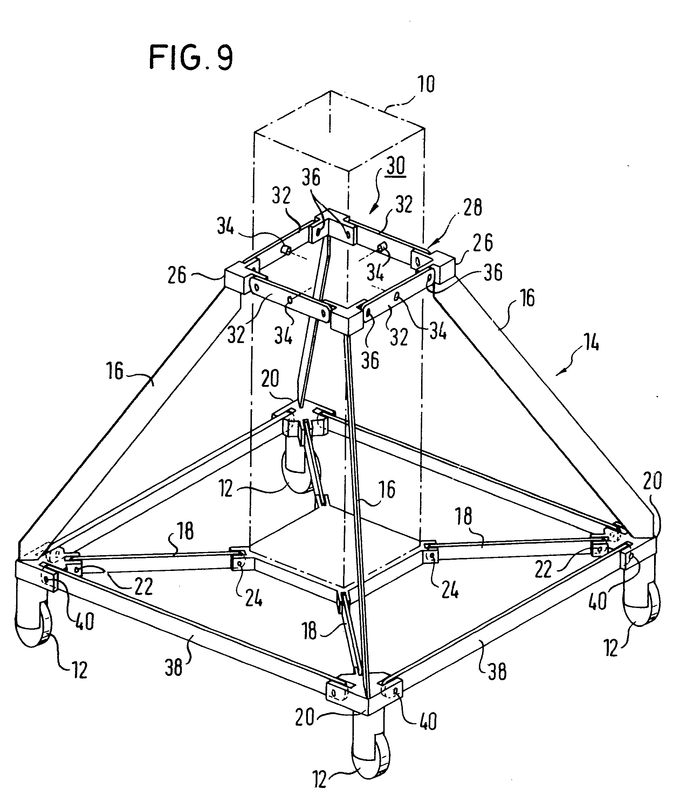

Fig. 8 zeigt in einer vereinfachten schematischen Darstellung die Verbindung zweier Plattformwände 618 gemäß einer Abwandlung zu Fig. 7. Dabei sind die Plattformwände 618 über Stege 678 fest mit einer Lagerhülse 680 zur Aufnahme eines Schwenkzapfens verbunden, mit Hilfe dessen ein nicht dargestellter Stützarm an der Plattform angelenkt ist. In dem Fall sind also die Plattformwände 618 nicht gelenkig miteinander verbunden wie bei dem in Fig. 7 dargestellten Ausführungsbeispiel. Die Stege 678 sind in ihrer Form und in ihren Abmessungen so gewählt, daß ihre Biegesteifigkeit geringer ist als die Biegesteifigkeit der Plattformwände 618, in dem durch die Querschenkel vervollständigten Abschnitt. Dies ermöglicht trotz der festen Verbindung der beiden Plattformwände 618 miteinander eine Verformung der Plattform in der vorstehend beschriebenen Weise.

In den Fig. 1 bis 3 wurde die Verformung der Plattform zur größeren Klarheit stark übertrieben dargestellt. In der Praxis rechnet man beispielsweise bei einem Kranportal mit einer Durchgangsbreite von etwa 9 Metern mit der Möglichkeit, daß Bodenunebenheiten von ca. 30 cm Höhe durch eine entsprechende Verformung der Plattform geschluckt werden können.

Die in den Fig. 4, 5 und 6 gezeigten Verbindungskonstruktionen zwischen dem Aufbau und der Plattform stellen sicher, daß keine wesentlichen Verwindungskräfte in den Aufbau eingeleitet werden. Dies ist bedeutsam, wenn der Aufbau beispielsweise einen Kugeldrehkranz trägt, der keinesfalls verwunden werden darf.

In der Ausführungsform nach den Fig. 1 bis 8 kann die Spurseite der Auflager verändert werden, was bei der Ausführungsform nach Fig. 9 nicht ohne weiteres möglich ist. Auch die Ausführungsformen nach der Fig. 9 können selbstverständlich dahin abgewandelt werden, daß sie spurveränderlich sind.

In Fig. 9 ist als Aufbau ein Abschnitt eines Kranturms 10 vorgesehen. An dem Kranturmabschnitt 10 sind vier Auflager 12 angebracht. Jedes dieser Auflager 12 ist als Radsatz ausgebildet und an dem Kranturmabschnitt 10 durch ein Zweilenkerführungssystem 14 geführt.

Das Zweilenkerführungssystem 14 umfaßt einen oberen Führungslenker 16 und einen unteren Führungslenker 18, die in ihrem Scheitel 20 durch ein Scheitelgelenk 22 gelenkig miteinander verbunden sind. Die Gelenkachse des Scheitelgelenks 22 steht senkrecht zu einer vertikalen Diagonalebene durch die beiden Auflager 12, welche Diagonalebene auch die einander diagonal gegenüberliegenden Zweilenkerführungssysteme enthält. Der untere Führungslenker ist durch ein Führungslenkergelenk 24 mit dem Kranturmabschnitt 10 verbunden, dessen Gelenkachse ebenfalls senkrecht zu der erwähnten Diagonalebene steht. Der obere Führungslenker 16 endet in einem Gelenkblock 26, der mit einer Ecke 28 eines Vierlenkerkopplungssystems 30 verbunden ist. Das Vierlenkerkopplungssystem 30 umfaßt vier Kopplungslenker 32, von denen jeweils einer an je einer Seitenfläche des Kranturmabschnitts 10 um Kopplungslenkerschwenkgelenke 34 schwenkbar gelagert ist. Die Schwenkachsen der Kopplungslenkerschwenkgelenke stehen senkrecht zu der Längserstreckung der Kopplungslenker und im wesentlichen parallel zur Standfläche, auf welcher die Auflager 12 stehen. Jeder Gelenkblock 26 ist mit den an ihm anschließenden Kopplungslenkern 32 über je ein Kopplungsgelenk 36 verbunden, so daß die Kopplungslenker 32 untereinander universalgelenkig verbunden sind.

Es sei angenommen, daß die vier Auflager auf einem ebenen Gelände, also auf einer gemeinsamen Ebene stehen. Diese Ebene sei als die Nullebene der Standkonstruktion bezeichnet. Wenn das in Fig. 9 rechte Auflager 12 gegenüber dieser Nullebene der Standkonstruktion angehoben wird, so wird das in Fig. 9 linke Auflager 12 gegenüber dieser Nullebene in der gleichen Richtung und um die gleiche Strecke angehoben, wie sich ohne weiteres aus einer Betrachtung des Vierlenkerkopplungssystems 30 ergibt. Dementsprechend werden die in der Fig. 9 vorderen und hinteren Auflager 12 gegenüber der Nullebene um dieselbe Strecke abgesenkt, um welche die rechten und linken Auflager gegenüber der Nullebene angehoben werden. Auch dies ergibt sich ohne weiteres aus der Betrachtung des Vierlenkerkopplungssystems 30. Die Nullebene ist eine in bezug auf den Aufbau feste Ebene parallel zu der durch die vier Kopplungslenkerschwenkgelenke 34 definierten Ebene. Wenn man in Fig. 9 davon ausgeht, daß die vier Auflager 12 zunächst auf einer Fahrfläche stehen, die mit der Nullebene der Standkonstruktion zusammenfällt, so ist es möglich, jedes der vier Auflager 12 gegenüber der Fahrfläche anzuheben, ohne daß sich die drei übrigen Auflager von der Fahrfläche abheben. Dies bedeutet, daß die Standkonstruktion beliebig unebenes Gelände befahren kann, solange die vertikalen Ausschläge der Unebenheiten nur innerhalb des durch die Beweglichkeit des Vierlenkerkopplungssystems festgelegten Rahmens der möglichen Ausschläge der Auflager 12 gegenüber der Nullebene bleiben.

Zur Konstruktion ist noch nachzutragen, daß die Scheitel 20 jeweils zweier aufeinanderfolgender Zweilenkerführungssysteme 14 durch Stützlenker 38 miteinander verbunden sind, welche an den Scheiteln 20 durch Stützgelenke 40 angelenkt sind. Die Gelenkachsen dieser Stützgelenke stehen senkrecht zur gemeinsamen Vertikalebene durch die beiden dem jeweiligen Stützlenker 38 zugeordneten Auflager.

In allen Ausführungsformen kann man sich die Auflager, z. B. die Auflager 12 in Fig. 9 oder die Auflager 430 in Fig. 1 so hoch vorstellen, daß ein unterfahrbares Portal gebildet wird.

## Patentansprüche

1. Geländeanpassungsfähige, insbesondere fahrbare Standkonstruktion für einen Aufbau (416), mit vier wenigstens annähernd in den Ecken eines Rechtecks vorzugsweise eines Quadrats, angeordneten Geländeauflagern (430), welche — im Falle ebenen Geländes — in einer gemeinsamen in bezug auf den Aufbau festen Nullebene liegen, wobei zwei einander diagonal gegenüberliegende Auflager (430) gegenüber dem Aufbau (416) in im wesentlichen vertikaler Richtung zur Nullebene beweglich und derart miteinander gekoppelt sind, daß bei Auslenkung eines ersten Auflagers (430) gegenüber der Nullebene das zweite dem ersten diagonal gegenüberliegende Auflager (430) gegenüber der Nullebene in gleicher Richtung und annähernd um die gleiche Strecke ausgelenkt wird und wobei das dritte und das vierte Auflager (430) mit dem ersten und dem zweiten Auflager (430) derart gekoppelt sind, daß sie bei diesen Auslenkungen des ersten und des zweiten Auflagers (430) gegenüber der Nullebene in entgegengesetzter Richtung um gleiche Strecken ausgelenkt werden, wie das erste und das zweite Auflager (430), dadurch gekennzeichnet, daß der Aufbau (416) mit einer im wesentlichen horizontalen Plattform (412) verbunden ist, welche aus vier in vertikalen Kanten (419) jeweils paarweise miteinander verbundenen, im wesentlichen rechteckigen verwindungsweichen Plattformwänden (418) besteht, wobei die Plattform (412) im Bereich der vertikalen Kanten (419) eine Biegesteifigkeit um die durch die vertikalen Kanten (419) definierten Achsen (424) hat, die kleiner ist als die Biegesteifigkeit der Plattformwände (418) um kantenparallele Achsen im Bereich außerhalb der vertikalen Kanten (419) und wobei durch eine Aussteifung (416, 442) in einem mittleren Höhenbereich der Plattform (412) und/oder durch die Reststeifigkeit im Bereich der Kanten (419) ein Zusammenklappen des horizontalen Plattformquerschnitts auf mittlerer Höhe der Plattformwände (418) unter den im Betrieb zu erwartenden Horizontalkräften verhindert wird, eine Neigung einander diametral gegenüberliegender Kanten (419) gegeneinander aber möglich ist und daß mit der Plattform (412) nahe den Kanten (419) horizontal nach außerhalb der Plattform (412) ausladende Stützarme (422) um horizontale Querachsen biegefest verbunden sind, welche in horizontalem Abstand von der jeweiligen Kante (419) ein Auflager (430) tragen.

2. Standkonstruktion nach Anspruch 1, dadurch gekennzeichnet, daß die Biegesteifigkeit der Plattformwände (418) im Bereich der vertikalen Kanten (419) höchstens 50%, vorzugsweise höchstens 10% der Biegesteifigkeit im Bereich außerhalb der Kanten (419) beträgt.

3. Standkonstruktion nach Anspruch 1 oder 2, dadurch gekennzeichnet, daß die Plattformwände (418) in den vertikalen Kanten (419) gelenkig miteinander verbunden sind.

4. Standkonstruktion nach einem der Ansprüche 1 bis 3, dadurch gekennzeichnet, daß die Aussteifung (416, 442) in den Diagonalen-Schnittpunkten der Plattformwände (418) angreift.

5. Standkonstruktion nach Anspruch 4, dadurch gekennzeichnet, daß die Aussteifung (416, 442) in den Diagonalen-Schnittpunkten der Plattformwände (418) mit diesen um zu der jeweiligen Wandebene im wesentlichen senkrechte Achsen (441) gelenkig oder drehweich verbunden ist.

6. Standkonstruktion nach einem der Ansprüche 1 bis 5, dadurch gekennzeichnet, daß die Aussteifung (416, 442) von einem Teil des Aufbaus (416) gebildet ist, welcher die Verbindung des Aufbaus (416) mit der Plattform (412) herstellt.

7. Standkonstruktion nach einem der Ansprüche 1 bis 6, dadurch gekennzeichnet, daß die Plattformwände (418) jeweils von einem Profilträger gebildet sind.

8. Standkonstruktion nach Anspruch 7, dadurch gekennzeichnet, daß der Profilträger (518) ein U-Profil aufweist, dessen Außenschenkel (548) im wesentlichen horizontal angeordnet sind.

9. Standkonstruktion nach Anspruch 7, dadurch gekennzeichnet, daß der Profilträger von einem Doppel-T-Träger gebildet ist, dessen Querschenkel im wesentlichen horizontal angeordnet sind.

10. Standkonstruktion nach einem der Ansprüche 1 bis 9, dadurch gekennzeichnet, daß die Stützarme (422) jeweils nahe den vertikalen Kanten (419) um eine im wesentlichen vertikale Schwenkachse (424) schwenkbar an der Plattform (412) angelenkt sind.

11. Standkonstruktion nach Anspruch 10, dadurch gekennzeichnet, daß die Schwenkachsen (424) der die Stützarme (422) mit der Plattform (412) verbindenden Gelenke mit den Achsen (419) der die Plattformwände (418) miteinander verbindenden Gelenke zusammenfallen.

12. Standkonstruktion nach einem der Ansprüche 1 bis 11, dadurch gekennzeichnet, daß die Standkonstruktion und der Aufbau (416) ein Portal bilden.

13. Geländeanpassungsfähige, insbesondere fahrbare Standkonstruktion für einen Aufbau (10), mit vier wenigstens annähernd in den Ecken eines Rechtecks vorzugsweise eines Quadrats, angeordneten Geländeauflagern (12), welche im Falle ebenen Geländes — in einer gemeinsamen in bezug auf den Aufbau (10) festen Nullebene liegen, wobei zwei einander diagonal gegenüberliegende Auflager (12) gegenüber dem Aufbau (10) in im wesentlichen vertikaler Richtung zur Nullebene beweglich und derart miteinander gekoppelt sind, daß bei Auslenkung eines ersten Auflagers (12) gegenüber der Nullebene das zweite dem ersten diagonal gegenüberliegende Auflager (12) gegenüber der Nullebene in gleicher Richtung und annähernd um die gleiche Strecke ausgelenkt wird und wobei das dritte und das vierte Auflager (12) mit dem ersten und dem zweiten Auflager (12) derart gekoppelt sind, daß sie bei diesen Auslenkungen des ersten und des zweiten Auflagers (12) gegenüber der Nullebene in entgegengesetzter Richtung um gleiche Strecken ausgelenkt werden, wie das erste und das zweite Auflager (12) unter Kopplung der vier Auflager (12) durch ein am Aufbau (10) angeordnetes Mehrlenkerkopplungssystem (30), dessen Kopplungslenker (32) im wesentlichen parallel zu den Verbindungslinien jeweils zweier aufeinanderfolgender Auflager (12) angeordnet, an ihren Enden (bei 28) universalgelenkig miteinander verbunden und an mittlerer Stelle (bei 34) ihrer Länge am Aufbau (10) um Kopplungslenkerschwenkachsen (34) gelenkig gelagert sind, welche senkrecht zur Längserstreckung des jeweiligen Kopplungslenkers (32) und im wesentlichen parallel zur Nullebene sind, wobei die die Universalgelenke enthaltenden Ecken (28) des Mehrlenkerkopplungssystems (30) mit den Auflagern (12) verbunden sind, dadurch gekennzeichnet, daß die Auflager (12) in den Scheiteln je eines Zweilenkerführungssystems (14) angeordnet sind, wobei die Zweilenkerführungssysteme (14) diagonal einander gegenüberliegender Auflager (12) jeweils in einer diesen Auflagern (12) zugeordneten vertikalen Diagonalebene liegen und von annähernd im Scheitel gelenkig durch ein Scheitelgelenk (22) mit zur jeweiligen Diagonalebene senkrechter Achse gelenkig miteinander verbundenen Führungslenkern (16, 18) gebildet sind und von den Führungslenkern (16, 18) jedes Zweilenkerführungssystems (14) jeweils einer (16) an seinem scheitelfernen Ende mit der zugehörigen Ecke (28) des Mehrlenkerkopplungssystems (30) verbunden ist und der andere (18) mit seinem scheitelfernen Ende um ein am Aufbau (10) angeordnetes Führungslenkergelenk (24) mit zu der zugehörigen Diagonalebene senkrechter Achse schwenkbar gelagert ist.

14. Standkonstruktion nach Anspruch 13, dadurch gekennzeichnet, daß das Führungslenkergelenk (24) in annähernd vertikaler Flucht mit der zugehörigen Ecke (28) des Mehrlenkerkopplungssystems (30) liegt.

15. Standkonstruktion nach einem der Ansprüche 13 und 14, dadurch gekennzeichnet, daß aufeinanderfolgende Zweilenkerführungssysteme (14) wenigstens annähernd in den Scheiteln durch Stützlenker (38) miteinander verbunden sind, welche an den Zweilenkerführungssystemen (14) durch Stützgelenke (40) mit zur vertikalen Verbindungsebene der jeweiligen Auflager (12) im wesentlichen senkrechter Gelenkachse verbunden sind.

## Claims

1. Ground-adaptable, in particular mobile, stand for a superstructure (416), with four ground supports (430) disposed at least approximately in the corners of a rectangle, preferably of a square, which ground support lie (in the case of level ground) in a common datum plane fixed in relation to the superstructure, wherein two diagonally opposed supports (430) are coupled movably relative to the superstructure (416) in substantially vertical direction to the datum plane and to one another so that, upon deflection of a first support (430) relative to the datum plane, the second support (430) lying diagonally opposite the first is deflected relative to the datum base in the same direction and approximately by the same distance, and wherein the third and the fourth supports (430) are coupled to the first and second supports (430) in such a way that, with these deflections of the first and second supports (430), they are deflected relative to the datum plane in opposite direction by the same distances as the first and second supports (430), characterised in that the superstructure (416) is connected to a substantially horizontal platform (412) which comprises four substantially rectangular platform walls (418) which yield to distorsion and are each connected one to another in pairs at vertical edges (419), the platform (412) having in the region of the vertical edges (419) a bending resistance about the axes (424) defined by the vertical edges (419) which is less than the bending resistance of the platform walls (418) about edge-parallel axes in the zone outside the vertical edges (419), and wherein a stiffening (416, 442) in a middle height zone of the platform (412) and/or the residual regidity in the region of the edges (419) prevents any collapsing of the horizontal platform cross-section at middle height of the platform walls (418) under horizontal forces to be expected in operation, but an inclination of diametrically opposed edges (419) relative to one another is possible, and that supporting arms (422) projecting horizontally outside the platform (412) are connected to the platform (412) near the edges (419) in bending-resistant manner about horizontal transverse axes, which supporting arms carry a support (430) at a horizontal distance from the respective edge (419).

2. Stand structure according to Claim 1, characterised in that the bending resistance of the platform walls (418) in the region of the vertical edges (419) amounts at most to 50%, preferably at most to 10%, of the bending resistance in the region outside the edges (419).

3. Stand structure according to Claim 1 or Claim 2, characterised in that the platform walls (418) are articulatedly connected one to another in the vertical edges (419).

4. Stand structure according to one of Claim 1 to 3, characterised in that the stiffening (416, 442) acts at the diagonal intersection points of the platform walls (418).

5. Stand structure according to Claim 4, characterised in that at the diagonal intersection points of the platform walls (418) the stiffening (416, 442) ist connected hereto articulatedly or flexibly about axes (441) substantially perpendicular to the respective wall plane.

6. Stand structure according to one of Claims 1 to 5, characterised in that the stiffening (416, 442) is formed by a part of the superstructure (416), which brings about the connection of the superstructure (416) with the platform (412).

7. Stand structure according to one of Claims 1 to 6, characterised in that the platform walls (418) are each formed by a sectional beam.

8. Stand structure according to Claim 7, characterised in that the sectional beam (518) is of U-section, the outer arms (548) of which are disposed substantially horizontally.

9. Stand structure according to Claim 7, characterised in that the sectional beam is formed by a double T-beam, the transverse arms of which are disposed substantially horizontally.

10. Stand structure according to one of Claims 1 to 9, characterised in that the supporting arms (422) in each case are articulated pivotably to the platform (412) near the vertical edges (419) about a substantially vertical pivot axis (424).

11. Stand structure according to Claim 10, characterised in that the pivot axes (424) of the joints connecting the supporting arms (422) of the joints connecting the platform walls (418) one with another.

12. Stand structure according to one of Claims 1 to 11, characterised in that the stand structure and the superstructure (416) form a gantry.

13. Ground-adaptable, in particular mobile, stand structure for a superstructure (10), with four ground supports (12) disposed at least approximately in the corners of a rectangle, preferably of a square, which ground supports lie (in the case of level ground) in a common datum plane fixed in relation to the superstructure (10), wherein two diagonally opposed supports (12) are coupled movably relative to the superstructure (10) in substantially vertical direction to the datum plane and are so coupled to one another that, upon deflection of a first support (12) relative the datum plane, the second support (12) lying diagonally opposite the first is deflected relative to the datum plane in the same direction and approximately by the same distance, and wherein the third and the fourth supports (12) are coupled to the first and second supports (12) in such a way that, with these deflections of the first and second supports (12), they are deflected relative to the datum plane in opposite direction by the same distances as the first and second supports (12), the four supports (12) being coupled by a multi-link coupling system (30) arranged on the superstructure (10), the coupling links (32) of which system are disposed substantially parallel to the connecting lines respectively of the successive supports (12), are connected to one another at their ends (at 28) by universal joints and in the middle (at 34) of their length are articulatedly mounted on the superstructure (10) about coupling-link pivot axes (34) which are perpendicular to the longitudinal extent of the respective coupling link (32) and are substantially parallel to the datum plane, the corners (28) of the multi-link coupling system (30) comprising the universal joints being connected with the supports (12), characterised in that the supports (12) are disposed in the apices of each two-link guide system (14), wherein the two-link guide systems (14) of diagonally opposed supports (12) lie respectively in a vertical diagonal plane associated with these supports (12) and are formed by guide links (16, 18) which are articulatedly connected to one another approximately in the apex by an apex joint (22) with an axis perpendicular to the respective diagonal plane, and in each case one (16) of the guide links (16, 18) of each two-link guide system (14) is connected at its end remote from the apex to the associated corner (28) of the multi-link coupling system (30) and of which the other (18) at its end remote from the apex is pivotably mounted about a guide-link joint (24) arranged on the superstructure (10) with an axis perpendicular to the associated diagonal plane.

14. Stand structure according to Claim 13, characterised in that the guide-link joint (24) lies in approximately vertical alignment with the associated corner (28) of the multi-link coupling system (30).

15. Stand structure according to one of Claims 13 and 14, characterised in that successive two-link guide systems (14) are connected to one another by supporting links (38) at least approximately at the apices, which supporting links of the two-link guide systems (14) are connected by supporting joints (40) with a joint axis substantially perpendicular to the vertical connecting plane of the respective supports (12).

**Revendications**

1. Châssis tout-terrain, en particulier châssis tout-terrain mobile, pour une superstructure (416), doté de quatre appuis (430) disposés au moins approximativement dans les angles d'un rectangle ou de préférence d'un carré, appui qui, lorsque le terrain est plat, se situent dans un plan zéro commun fixe par rapport à la superstructure, deux appuis (430) opposés en diagonale étant mobiles par rapport à la superstructure (416) en direction pratiquement verticale et étant couplés de telle sorte que lorsqu'un premier appui (430) sort du plan zéro, le deuxième appui (430), opposés en diagonale au premier, sort du plan zéro dans le même sens et s'en éloigne approximativement de la même distance, le troisième et le quatrième appuis (430) étant couplés de telle sorte au premier et au deuxième appuis (430) que lors de ces déplacement du premier et du deuxième appuis (430) par rapport au plan nul, ils se trouvent déplacés en sens inverse de la même distance que ces derniers, caractérisé par le fait que la superstructure (416) est reliée à une plateforme (412) pratiquement horizontale consistant en quatre cloisons de plateforme (418) raccordées entre elles par paire par des arêtes verticales (419), cloisons pratiquement rectangulaires et pouvant subir un effet de torsion, la plateforme (412) présentant dans la zone des arêtes verticales (419) une rigidité à la flexion autour d'axes (424) définis par les arêtes verticales (419), rigidité inférieure à la rigidité à la flexion des cloisons de plateforme (418) autour d'axes parallèles aux arêtes dans la zone située hors des arêtes verticales (419), un système de renforcement (416, 442) dans une zone située à mi-hauteur de la plateforme (412) et/ou la rigidité résiduelle dans la zone des arêtes (419) empêchant un pliage de la section horizontale de la plateforme à mi-hauteur des cloisons de plateforme (418) sous l'effet des efforts horizontaux à attendre durant le service, une inclinaison l'une par rapport à l'autre d'arêtes (419) diamétralement opposées étant possible, et par le fait qu'à la plateforme (412), sont raccordés à proximité des arêtes (419) des bras-supports (422) disposés horizontalement et en porte-à-faux vers l'extérieur de la plateforme (412), bras résistant à la flexion autour d'axes transversaux horizontaux, bras supportant, à une certaine distance horizontale de l'arête correspondante (419) un système d'appui (430).

2. Châssis selon la revendication 1, caractérisé par le fait que la rigidité à la flexion des cloisons de plateforme (418) est, au voisinage des arêtes verticales (419), au maximum 50%, de préférence 10% de la rigidité à la flexion dans la zone située hors des arêtes (419).

3. Châssis selon l'une des revendications 1 et 2, caractérisé par le fait que les cloisons de plateforme (418) sont raccordées entre elles de façon articulée au niveau des arêtes verticales (419).

4. Châssis selon l'une des revendications 1 à 3, caractérisé par le fait que le système de renforcement (416, 442) s'applique aux points d'intersection des diagonales des cloisons de plateforme (418).

5. Châssis selon la revendication 4, caractérisé par le fait que le système de renforcement (416, 442) est, au point d'intersection des diagonales des cloisons de plateforme (418), raccordé à ces cloisons de façon articulée ou avec une certaine possibilité de pivotement autour d'axes (441) pratiquement perpendiculaires au plan de la cloison.

6. Châssis selon l'une des revendications 1 à 5, caractérisé par le fait que le système de renforcement (416, 442) est constitué par une partie de la superstructure (416), partie créant le raccordement de la superstructure (416) à la plateforme (412).

7. Châssis selon l'une des revendications 1 à 6, caractérisé par le fait que les cloisons de plateforme (418) sont constituées par une poutre profilée.

8. Châssis selon la revendication 7, caractérisé par le fait que la poutre profilée (518) présente un profil en U dont les ailes extérieures (548) sont disposées pratiquement horizontalement.

9. Châssis selon la revendication 7, caractérisé par le fait que la poutre profilée est constituée d'une poutre en double T dont les ailes transversales sont disposées pratiquement horizontalement.

10. Châssis selon l'une des revendications 1 à 9, caractérisé par le fait que les bras-supports (422) sont articulés sur la plateforme (412) près des arêtes verticales (419) autour d'un axe d'articulation pratiquement vertical (424).

11. Châssis selon la revendication 10, caractérisé par le fait que les axes (424) des articulations raccordant les bras-supports (422) à la plateforme (412) coïncident avec les axes (419) des articulations réunissant entre elles les cloisons de plateforme (418).

12. Châssis selon l'une des revendications 1 à 11, caractérisé par le fait que le châssis et la superstructure (416) forment un portique.

13. Châssis tout-terrain, en particulier châssis tout-terrain mobile, pour une superstructure (10), doté de quatre appuis (12) disposés au moins approximativement dans les angles d'un rectangle ou de préférence d'un carré, appuis, qui lorsque le terrain est plat, se situent dans un plan zéro commun fixe par rapport à la superstructure (10), deux appuis opposés (12) en diagonale étant mobiles par rapport à la superstructure (10) en direction pratiquement verticale et étant couplés de telle sorte que lorsqu'un premier appui (12) sort du plan zéro, le deuxième (12), opposé en diagonale au premier, sort du plan zéro dans le même sens et s'en éloigne approximativement de la même distance, le troisième et le quatrième appuis (12) étant couplés de telle sorte au premier et au deuxième appuis (12), que lors de ces déplacements du premier et du deuxième appuis (12), par rapport au plan nul, ils se trouvent déplacés en sens inverse de la même distance que ces derniers, les quatre appuis étant couplés par un système de couplage (30) à plusieurs bras monté sur la superstructure, dont les bras de couplage (32) sont disposés pratiquement parallèlement aux lignes de liaison de deux appuis (12) se suivant, et sont raccordés entre eux par leurs extrémités (28) en articulations universelles et sont à mi-longueur (34) montés de façon articulée sur la superstructure autour d'axes d'articulation (34) des bras de couplage, axes disposés perpendiculairement au sens de la longueur de chaque bras de couplage (32) et pratiquement parallèlement au plan zéro, les angles (28) du système (30) de couplage à plusieurs bras contenant les articulations universelles étant raccordés aux systèmes d'appui (12), caractérisé par le fait que les appuis (12) sont disposés aux sommets d'un système de guidage à deux bras (14), les systèmes de guidage à deux bras (14) se situant chacun dans un plan transversal vertical associé à ces appuis (12) et étant constitués de bras de guidage (16, 18) raccordés entre eux de façon articulée à proximité du sommet par une articulation de sommet (22) à axe perpendiculaire au plan transversal, l'un (16) des bras de guidage (16, 18) de chaque système de guidage à deux bras (14) étant raccordé par son extrémité la plus éloignée du sommet à l'angle correspondant (28) du système de couplage à plusieurs bras (30), l'autre bras (18) se raccordant de façon articulée par son extrémité la plus éloignée du sommet et autour d'une articulation (24) de bras de guidage montée sur la superstructure, (10) à l'axe perpendiculaire au plan transversal correspondant.

14. Châssis selon la revendication 13, caractérisé par le fait que l'articulation (24) de bras de guidage se situe à peu près dans l'alignement vertical de l'angle correspondant (28) du système de couplage à plusieurs bras.

15. Châssis selon l'une des revendications 13 et 14, caractérisé par le fait que les systèmes de guidage à deux bras (14) se faisant suite sont raccordés entre eux, au moins à proximité des sommets, par des bras-supports (38), lesquels sont raccordés aux systèmes de guidage à deux bras (14) par des articulations d'appui (40) à axe pratiquement perpendiculaire au plan de liaison vertical des appuis (12) correspondants.

FIG.1

FIG.3

# FIG. 2

# FIG. 8

# FIG.4

# FIG.5

# FIG.6

# FIG.7

# FIG. 9